# EUROPEAN PATENT SPECIFICATION

(11) **EP 2 744 065 B1**
(45) Date of publication and mention of the grant of the patent: **23.08.2023**
(21) Application number: 12821720.5
(22) Date of filing: 12.07.2012
(51) Int. Cl.: H02J 7/02, H01M 10/44, H01M 10/48, H02J 3/46, H02J 7/00, H02J 7/10

(54) **ELECTRIC VEHICLE CHARGING SYSTEM AND ELECTRIC VEHICLE CHARGING APPARATUS**
AUFLADESYSTEM FÜR EIN ELEKTROFAHRZEUG UND AUFLADEGERÄT FÜR EIN ELEKTROFAHRZEUG
SYSTÈME DE CHARGE DE VÉHICULE ÉLECTRIQUE ET APPAREIL DE CHARGE DE VÉHICULE ÉLECTRIQUE

(30) Priority: 11.08.2011 JP 2011176056
(43) Date of publication of application: 18.06.2014
(73) Proprietor: Kabushiki Kaisha Toshiba, Minato-ku Tokyo 105-8001 (JP)
(72) Inventor: HAYASHI, Hideki, Tokyo (JP); EBATA, Yoshio, Tokyo (JP)
(74) Representative: Hoffmann Eitle
(86) International application number: PCT/JP2012/004508
(87) International publication number: WO 2013/021550

(56) References cited:
- WO-A1-2009/069481
- JP-A- 2010 081 722
- JP-A- 2011 125 178
- US-A1- 2010 145 540

## Description

### FIELD

An embodiment of the present invention relates to an electric automobile charging system for charging a storage battery mounted on an electric automobile, and to an electric automobile charging device.
US 2010/145540 A1 teaches a centralized load management for use in controllably recharging vehicles equipped with electrically powered propulsion systems, wherein the centralized vehicle load management system is hierarchical in nature in that it detects and remediates an overload which can be highly localized at one or more electrical substations or an overload which is widely distributed as a cumulative set of sub-critical loads. The centralized vehicle load management system operates to determine the load presented to the electric power grid by vehicles which are served by service disconnects which are located at a plurality of points on the electric power grid. The centralized vehicle load management system regulates the demands presented by the vehicles to the E-Grid thereby to spread the load presented to the electric power grid over time to enable the controllable charging of a large number of vehicles.

### BACKGROUND

As an electric automobile charging device, for example the technology set out in laid-open Japanese Patent Publication Tokkai H 5-207668 (hereinafter referred to as Patent Reference 1) has been disclosed. In this charging device, low-current (small-current) DC power is constantly obtained from an AC power source by means of a rectifier and a charger, and is used to charge a storage battery of the facility. When there is a charging request from the electric automobile, large DC power is obtained by the charger from the storage battery for this facility, and the storage battery of the electric automobile or the like is rapidly charged up. The charger has a construction permitting sharing by input/output changeover between charging control of the facility storage battery and charging control of the storage battery of the electric automobile or the like.

In this way, rapid charging of the secondary battery of the electric automobile or the like can be achieved, while averaging out the load on the AC power source.

However, the efficiency of the prior art electric automobile storage device is poor in that the storage battery of the electric automobile or the like can only be charged up by using the facility storage battery after first charging up the facility storage battery. There was therefore the problem of high fees for charging.

An object of the present invention is therefore to provide an electric automobile charging system and electric automobile charging device whereby charging fees can be made lower and charging current can be supplied directly to the storage battery of the electric automobile.

In order to solve the above problem, an electric automobile charging system is configured according to the features of independent claim 1. Preferred embodiments are defined in the respective dependent claims. Further, an electric automobile charging device is defined according to the features of independent claim 5.

Preferred embodiments are defined in the respective dependent claims.

### BRIEF DESCRIPTION OF THE DRAWINGS

Fig. 1 is a block diagram showing the layout of an electric automobile charging system according to a first embodiment;
Fig. 2 is a block diagram showing the layout of a charging device of an electric automobile charging system and an electric automobile according to the first embodiment;
Fig. 3 is a block diagram showing the layout of a center device of an electric automobile charging system according to the first embodiment;
Fig. 4 is a flowchart showing charging processing executed by the control section of the charging device of an electric automobile charging system according to the first embodiment;
Fig. 5 is a table showing location levels of an electric automobile in an electric automobile charging system according to the first embodiment;
Fig. 6 is a flowchart showing charging cutoff processing executed by a control section in a charging device of an electric automobile charging system according to the first embodiment;
Fig. 7 is a flowchart showing current reduction processing executed by a control section in a charging device of an electric automobile charging system according to the first embodiment.

### DETAILED DESCRIPTION OF THE PREFERRED EMBODIMENTS

An electric automobile charging system and electric automobile charging device according to embodiments of the invention are described in detail below with reference to the drawings.

### (First embodiment)

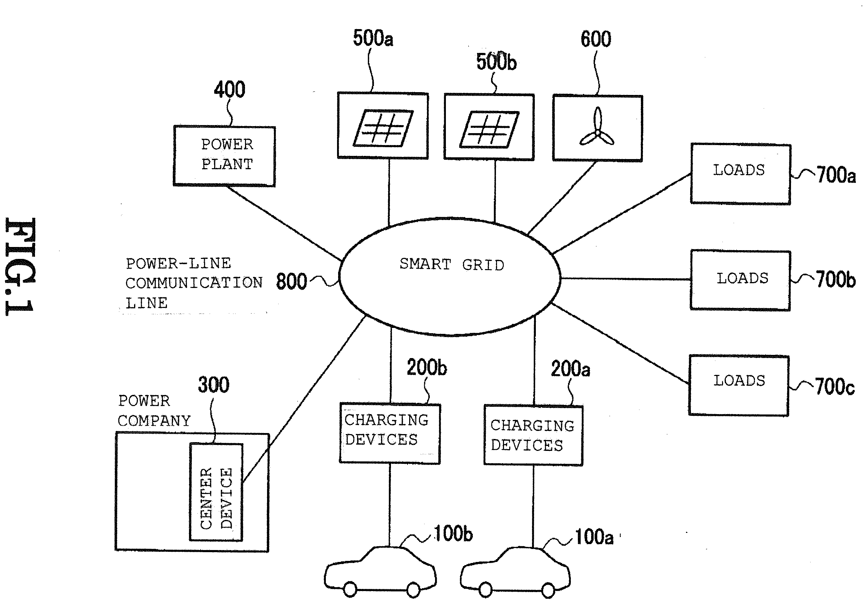

Fig. 1 is a block diagram showing the layout of an electric automobile charging system according to a first embodiment. This electric automobile charging system is constituted by connecting: electric automobiles 100a, 100b, charging devices 200a, 200b, a power company having a center device 300, a power plant 400, solar power generation systems 500a, 500b, a wind power generator 600, and a plurality of loads 700a, 700b, 700c, using communication leads and power lines 800 constituting a smart grid (intelligent power network).

A "smart grid" is a power network that is constructed so as to be capable of achieving in an optimal manner improvements in energy saving, cost restriction (cost saving) and reliability and transparency (fairness) by controlling the flow of power without human intervention, from both the aspects of the supply side and the demand side, by providing functionality for automatic adjustment of power demand/supply by installing metering equipment etc having artificial intelligence and communication functionality.

The charging devices 200a, 200b are provided corresponding to the electric automobiles 100a, 100b, so that charging of the storage battery sections provided in the electric automobiles 100a, 100b is performed by the power from the power lines 800, or the power stored in the storage battery sections is output to the power lines 800.

The center device 300 performs control of the demand and supply of power and processing of fees etc with respect to the plurality of loads 700a to 700c. This center device 300 is described in detail later.

The power plant 400 is constituted for example by a thermal power plant, hydroelectric power plant or atomic power plant and outputs the power that it generates to the power lines 800. The solar power generation systems 500a, 500b, also termed "mega solar systems", generate power by photovoltaic conversion and output this to the power lines 800.

The plurality of loads 700a to 700c comprise for example ordinary households, factories or offices: they consume power supplied from the power lines 800 and consume power which they generate themselves and inject excess power into the system by outputting this to the power lines 800.

The power lines 800 send and receive power between the power plant 400, solar power generation systems 500a, 500b, charging devices 200a, 200b, center device 300 and loads 700a to 700c, and are employed for exchange of transmission signals i.e. communication by power-line carrier. It should be noted that, instead of communication using power-line carrier employing the power lines 800, it would be possible to arrange to perform communication using private lines, wireless or the Internet (none of these are shown).

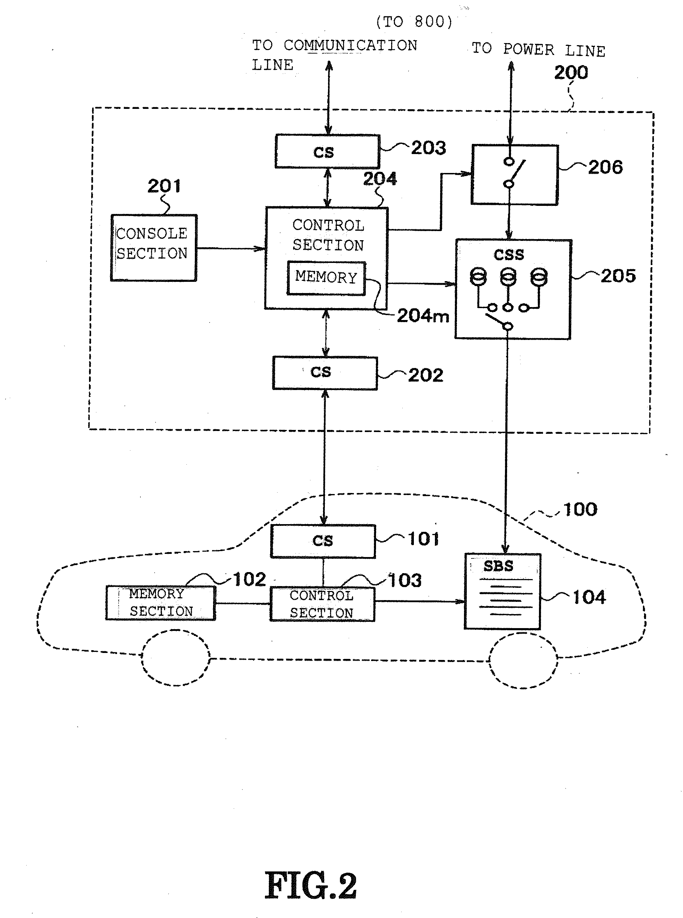

Next, a detailed description of the charging devices and electric automobiles will be given. Fig. 2 is a block diagram showing the layout of the charging devices and electric automobiles of an electric automobile charging system according to the first embodiment.

An electric automobile 100 is freely detachably connected through a connector, not shown, with a charging device 200. The electric automobile 100 is provided with a communication section 101, memory section 102, control section 103 (first control section) and storage battery section 104.

The communication section 101 makes a request to permit charging of the storage battery section 104 to the corresponding charging device 200a (200b) and transmits information relating to the owner (for example name and address), information relating to the contracted power company, information relating to the type of vehicle or type of enterprise, and charging/discharging information of the storage battery section 104 to the charging device 200a (200b). The communication section 101 receives from the charging device 200a (200b) information relating to charging permission, information relating to charging cutoff, and instruction information for setting the charging current to 1/1, 1/2 or 1/5.

The meaning of 1/1, 1/2 and 1/5 will be explained below.

The memory section 102 stores information relating to the owner, information relating to the contracted power company, information relating to the type of vehicle or type of enterprise, charging/discharging information of the storage battery section 104 and fault history information. The control section 103 performs control of the storage battery section 104, control of the communication section 101, and control of the memory section 102.

The charging device 200 comprises a console section 201, a communication section 202, a communication section 203, a control section 204 (second control section), and a current selection section 205 and an cutoff section 206.

The console section 201 comprises a switch or liquid crystal panel and performs commencement of charging, input of charging cutoff, selection of for example 1/1, 1/2, or 1/5 of the charging current and payment of the charge using a card or cash. The selection of 1/1, 1/2 or 1/5 of the charging current is performed for example as follows.

If the current level is "4", "1/1" is selected; if the current level is "3", "1/2" is selected; if the current level is "2", "1/5" is selected; if the current level is "1", "0" is selected.

When a command to the effect "reduce current" or a command to the effect "interrupt charging" is received from the center device 300 that is installed at the power company in Fig. 1, if the communication section 203 cannot obey this command from the center device 300, the communication section 203 makes a reply to the effect "cannot obey command" to the center device 300.

The control section 204 in the charging device 200 controls the current selection section 205 and controls the cutoff section 206 in response to a control signal from the console section 201. The control section 204 decides on the current levels 4, 3, 2, or 1 in accordance with a command from the communication section 203, and controls the current selection section 205 and also controls the cutoff section 206 in accordance with this current level that has thus been decided. The control section 204 transmits this current level that has thus been decided to the electric automobile 100 and the center device 300 through the communication sections 202, 203. Also, the control section 204 comprises a memory 204m that stores the location information of the charging devices 200a, 200b.

The current selection section 205 is provided with a plurality of current sources corresponding to the current levels 4, 3, 2, or 1 and a current source is selected by a switch in accordance with the current level decided on by the control section 204: the storage battery section 104 is charged by passing current from the selected current source to the storage battery section 104 of the electric automobile 100. Specifically, if the current level is level 4, the storage battery section 104 is subjected to highspeed charging; if the current level is level 1, the storage battery section 104 is subjected to low-speed charging. The cutoff section 206 is provided with a switch and interrupts the current from the power-line 800 by setting this switch to "open".

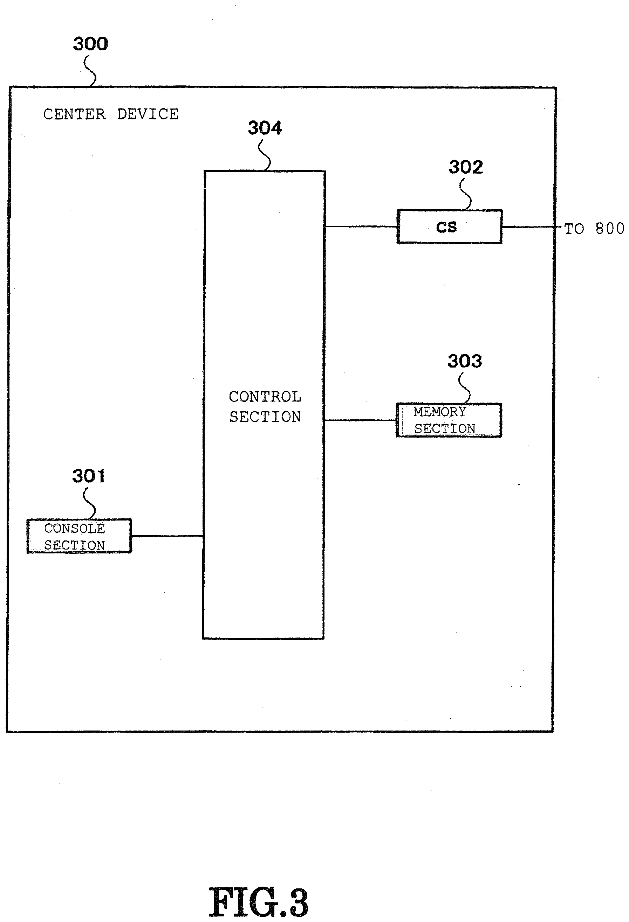

Next, the center device 300 installed at the power company will be described in detail. Fig. 3 is a block diagram showing the layout of the center device 300 employed in an electric automobile charging system according to the first embodiment. The center device 300 comprises a console section 301, communication section 302, memory section 303, and control section 304 (third control section).

The console section 301 is operated by for example the staff at the power company to perform initial setting of the fees per unit current or to input information such as to what extent the current level is to be lowered in periods of current reduction and is used to set beforehand for example the types of vehicle or the types of enterprise that may be subjected to current reduction or that are excluded from power cutoff (such as for example emergency vehicles).

The communication section 302 acquires information indicating the amount of power generated (power generation information) that is delivered by communication by power-line carrier from the power plant 400, the solar power generation system 500 or the wind power generator 600. It should be noted that the information indicating the amount of power generated includes the amount of power generated by the power plant 400 and the amount of power generated by the loads 700. The communication section 302 acquires information (used power information) relating to the amount of power consumption by communication with the plurality of loads 700 and charging devices 200 by power-line carrier using the power lines 800. The communication section 302 transmits commands to the effect "reduce current" or commands to the effect "interrupt charging" to the charging devices 200 through the communication lines.

The storage section 303 stores power generation information of the power plant 400, solar power generation system 500 or wind power generator 600, information of the power used by the plurality of loads 700 and charging devices 200, and information that is input by the console section 301.

The control section 304 in the center device 300 calculates the amount of power generated and the amount of power used by the smart grid as a whole and, based on the results of this calculation, decides on "current reduction" or "cutoff of charging". Also, the control section 304 controls the communication section 302 and controls the storage section 303.

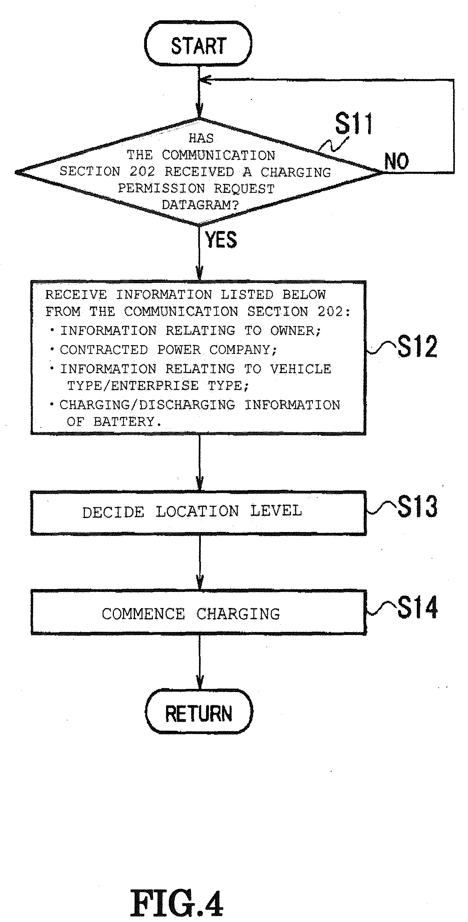

Next, the operation of the electric automobile charging system constructed as above will be described. The description below will focus on the operation of the control section 204 of the charging device 200. Fig. 4 is a flow chart showing the charging processing executed by the control section in the charging device of the electric automobile charging system.

First of all, the communication section 202 checks to ascertain (step S11) whether a charging permission request datagram has been received. When a charging permission request datagram is received, information relating to the owner, information regarding the contracting power company, information regarding the type of vehicle/type of enterprise, and charging/discharging information of the storage battery are received from the electric automobile 100 through the communication section 202 (step S12).

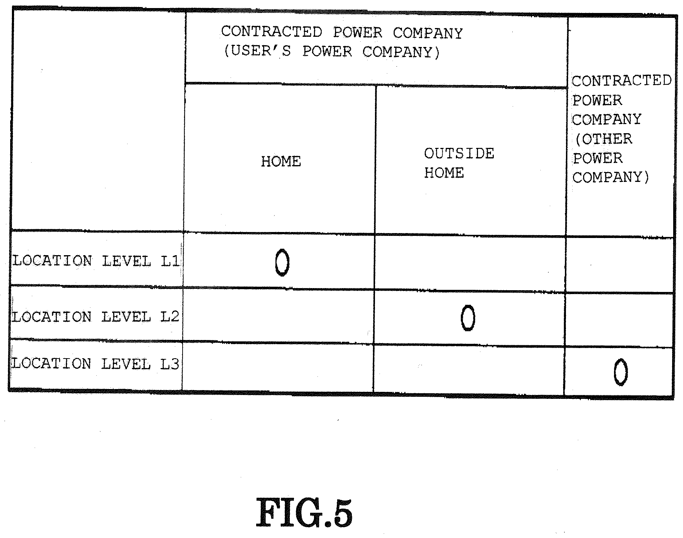

Next, the control section 204 decides on (step S13) the location level. In this connection, if the location of the user's electric automobile is at the user's residence in the user's power supply company, the location level is deemed to be L1; if the location of the user's electric automobile is in the user's power supply company but outside the user's residence, the location level is deemed to be L2; and if the location of the user's electric automobile is in another power supply company, the location level is deemed to be L3: the table of Fig. 5 is created showing the information of these location levels and is stored in the memory 204m. The distinction between the user's power supply company and another power supply company is decided from the information of the contract power company. The distinction between the user's residence and outside the user's residence is decided from the information regarding the owner.

Next, the control section 204 commences charging of the storage battery section 104 (step S14) by controlling the cutoff section 206 and current selection section 205 in accordance with the location level that has thus been decided.

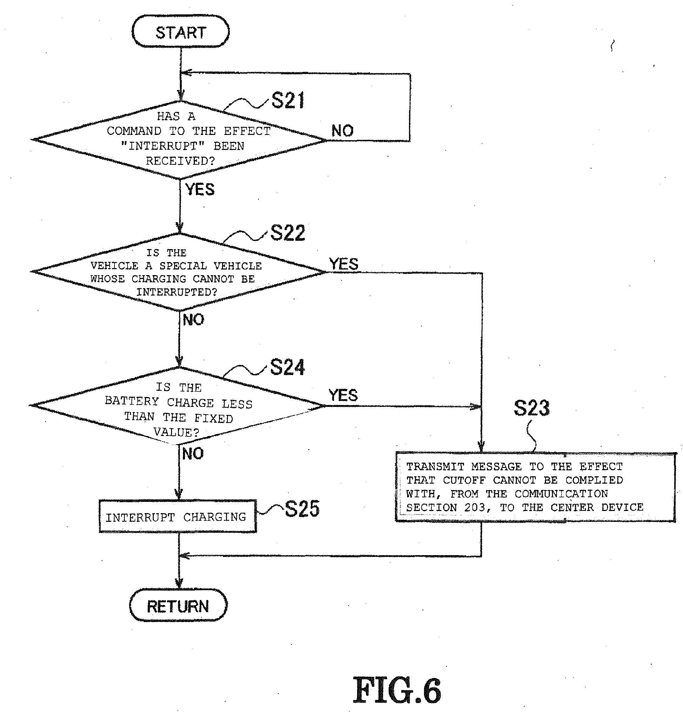

Next, the charging cutoff processing performed by the control section 204 in the charging device 200 will be described with reference to Fig. 6.

A check is made (step S21) as to whether or not a command from the center device 300 has been received to "interrupt charging". If the control section 204 has received a command to "interrupt charging", it decides (step S22), on the basis of information relating to the vehicle type/enterprise type that is stored in the memory 204m in the control section 204, whether the vehicle in question is a special vehicle, whose charging must not be interrupted.

The information that the vehicle in question is a special vehicle whose charging is not to be interrupted is input beforehand from the console section 301 in the center device 300 and is stored beforehand in the memory 204m in the control section 204 in the charging device, as information relating to the vehicle type/enterprise type. Special vehicles whose charging must not be interrupted are emergency vehicles such as ambulances.

Next, if the vehicle is indeed a special vehicle whose charging must not be interrupted, the control section 204 transmits (step S23) a message to the effect that cutoff of charging must not be complied with, to the center device 300, through the communication section 203.

Next, if the vehicle is a special vehicle whose charging must not be interrupted, the control section 204 checks (step S24) whether the battery charge is less than a fixed value, based on the charging/discharging information of the storage battery section 104 of the electric automobile 100.

If the battery charge is less than the fixed value, charging cannot be interrupted since the electric automobile 100 would be unable to move. Consequently, if the battery charge is less than the fixed value, the control section 203 transmits (step S23) to the center device 300 through the communication section 203 a message to the effect that cutoff of charging cannot be complied with.

Next, if the battery charge exceeds the fixed value, the cutoff section 206 opens the switch in response to an cutoff signal from the control section 204, with the result that charging of the storage battery section 104 is interrupted (step S25).

It should be noted that, if insufficiency of power from the center device 300 has ceased, a command for recommencement of charging is issued, causing charging to be recommenced.

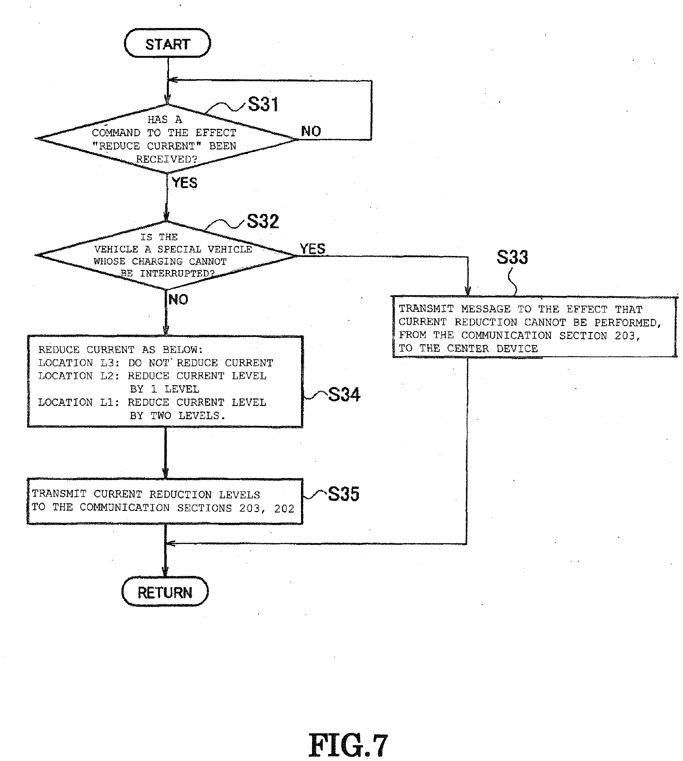

Next, current reduction processing that is executed by the control section 204 in the charging device 200 will be described with reference to Fig. 7.

A check is made (step S31) to ascertain whether or not a command has been received from the center device 300 to "reduce current". If a command to the effect "reduce current" has been received, the control section 204 decides (step S32), based on the information relating to the vehicle type/enterprise type that is stored in the memory 204m in the control section 204, whether the vehicle in question is in a special vehicle whose charging is not to be interrupted.

Next, if the vehicle is a special vehicle whose charging is not to be interrupted, the control section 204 transmits (step S33) to the center device 300 through the communication section 203 a message to the effect that current reduction cannot be performed.

Next, if the vehicle is not a special vehicle whose charging must not be interrupted, the control section 204 reads the location information that is stored in the memory 204m, and controls the current selection section 205 to output current in accordance with the command to "reduce current" (step S34).

Specifically, in the case of location L3, the electric automobile 100 is in the area of another power company, so a considerable battery charge is necessary in order to return home from the area of the other power company: the current level therefore cannot be reduced. In the case of location L2, the electric automobile 10 is in a region outside the home, so a fair amount of charge is necessary in order to return home from the area outside the home, so the current level is only lowered by one level. In the case of location L1, the electric automobile 100 is at home, so only a slight battery charge suffices, so the current level is reduced by two levels. In other words, for vehicles coming from further away, the extent of reduction in current level is made smaller.

It may be noted that, instead of the method described above, in the case of location L3, since a vehicle in question is that is out of contract, the method could be employed of considerably lowering the current level.

In addition, the control section 204 transmits the information as to the current level to which current reduction has been effected to the electric automobile 100 and to the center device 300, through the communication sections 202, 203 (step S35).

With an electric automobile charging system including an electric automobile charging device according to the first embodiment, the communication section 302 (information acquisition means of the present invention) of the center device 300 acquires information as to the amount of power generated and the amount of power used and the control section 304 (decision means of the present invention) of the center device 300 makes a decision for current reduction/cutoff of current to the storage battery section 104 based on the amount of power generated and amount of power used acquired by the communication section 302. The result of this decision is transmitted to the control section 204 in the charging device 200 by the communication section 302 (transmission means of the present invention).

The communication section 203 (reception means of the present invention) receives the result of this decision from the control device 304 of the center device, and the control section 204 (current restriction means) of the charging device interrupts or reduces the charging current to the storage battery section 104 in accordance with the decision result from the control section 304: the charging current can therefore flow directly to the storage battery section 104 of the electric automobile 100 and the charging fees can be made lower.

Also, the control section 204 (charging current decision means) decides on the amount of reduction of charging current based on the area information of the owner of the electric automobile 100 and the location information of the charging device 200, so the residual charge of the battery can never become zero and the electric automobile 100 can thus be reliably kept moving.

Also, if the vehicle in which the control section 204 is provided is of a preset vehicle type or relates to a preset type of enterprise, the control section 204 controls the cutoff section 206 and the current selection section 205 so that cutoff of the charging current to the storage battery section 104 or reduction thereof is not carried out, so in for example the case of emergency vehicles such as ambulances, the ambulance can be kept moving by an ample battery charge, so as to be capable of responding to emergencies.

Also, cutoff or reduction of the charging current is not performed if the residual charge of the storage battery section 104 of the electric automobile 100 is below a preset fixed value, so the residual battery charge can never become zero and the electric automobile 100 can be reliably kept moving.

It should be noted that, although, in the first embodiment, the information acquisition means and decision means of the present invention were provided in the center device 300, the information acquisition means and decision means of the present invention could alternatively be provided for example in the charging device 200.

While various embodiments of the present invention have been described above, these embodiments are presented merely by way of example and are not intended to restrict the scope of the invention. Novel embodiments thereof could be put into practice in various other modes and various omissions, substitutions or alterations could be effected.

The present invention can be applied to electric automobile charging devices and electric automobile charging systems in a smart grid system.

## Claims

1. An electric automobile charging system wherein a center device (300), an electric automobile (100a, 100b), and a charging device (200a, 200b) that charges a storage battery section (104) in said electric automobile (100a, 100b) are connected by power lines (800), comprising:
(a) an information acquisition means for acquiring information of an amount of power generated and an amount of power used;
(b) a decision means for deciding on cutoff of a charging current or reduction of said charging current to said storage battery section (104) in said electric automobile (100a, 100b), based on said information acquired by said information acquisition means;
(c) a current restriction means for interrupting said charging current to said storage battery section (104) in said electric automobile (100a, 100b) or reducing said charging current, based on a decision result by said decision means; and
(d) a charging current decision means for deciding on an amount of reduction of charging current, based on a relationship between area information of an owner of said electric automobile (100a, 100b) and location information of said charging device (200a, 200b), **characterized in that** the amount of the reduction in the current level is made smaller the further away the electric automobile (100a, 100b) is from home.

2. The electric automobile charging system according to claim 1, wherein:
(1) the information acquisition means and the decision means are comprised in the center device (300);
(2) the current restriction means and the charging current decision means are comprised in the charging device (200a, 200b);
(3) said center device (300) further comprises:
a transmission means for giving instructions, by communication, for a cutoff of said charging current or current reduction that has been decided on by said decision means; and
(4) said charging device (200a, 200b) further comprises:
a reception means for receiving instructions from said transmission means; and
(5) the current restriction means is configured to interrupt the charging current to said storage battery section (104) in said electric automobile (100a, 100b) or reduce said charging current, based on the instructions of said reception means.

3. The electric automobile charging system according to claim 1 or claim 2, further comprising a memory that stores information about said special vehicle whose charging should not be interrupted,
wherein said current restriction means performs control so as not to interrupt or reduce said charging current to said storage battery section (104), if said electric automobile (100a, 100b) is of a special vehicle in which charging should not be interrupted.

4. The electric automobile charging system according to claim 1 or claim 2,
wherein, if a residual battery charge of said storage battery in said electric automobile (100a, 100b) is below a preset fixed value, said current restriction means performs control so that cutoff or reduction of said charging current to said storage battery section (104) is not performed.

5. An electric automobile charging device (200a, 200b) comprising:
(a) an information acquisition means for acquiring information of an amount of power generated and an amount of power used;
(b) a decision means for deciding on cutoff of a charging current or reduction of said charging current to a storage battery section (104) in an electric automobile (100a, 100b), based on information acquired by said information acquisition means;
(c) a current restriction means for interrupting said charging current to said storage battery section (104) in said electric automobile (100a, 100b) or reduces said charging current, based on a decision result by said decision means; and
(d) a charging current decision means for deciding on an amount of reduction of said charging current, based on a relationship between area information of an owner of said electric automobile (100a, 100b) and location information of said charging device (200a, 200b) that performs charging of said storage battery section (104), **characterized in that** the amount of the reduction in the current level is made smaller the further away the electric automobile (100a, 100b) is from home.

6. The electric automobile charging device (200a, 200b) according to claim 5, further comprising a memory that stores information about said special vehicle whose charging should not be interrupted,
wherein said current restriction means performs control so as not to interrupt or reduce said charging current to said storage battery section (104), if said electric automobile (100a, 100b) is a special vehicle in which charging should not be interrupted.

7. The electric automobile charging device (200a, 200b) according to claim 5,
wherein, if said residual battery charge of said storage battery of said electric automobile (100a, 100b) is below a preset fixed value, said current restriction means performs control so that cutoff or reduction of said charging current to said storage battery section (104) is not performed.

## Patentansprüche

1. Ladesystem für Elektroautomobil, wobei eine Zentralvorrichtung (300), ein Elektroautomobil (100a, 100b) und eine Ladevorrichtung (200a, 200b), die einen Speicherbatterieabschnitt (104) in dem Elektroautomobil (100a, 100b) auflädt, durch Stromleitungen (800) verbunden sind, umfassend:
(a) eine Informationserfassungseinrichtung zum Erfassen von Informationen über eine erzeugte Energiemenge und eine verbrauchte Energiemenge;
(b) eine Entscheidungseinrichtung zur Entscheidung über eine Abschaltung eines Ladestroms oder eine Reduzierung des Ladestroms für den Speicherbatterieabschnitt (104) in dem Elektroautomobil (100a, 100b) basierend auf der durch die Informationserfassungseinrichtung erfassten Informationen;
(c) eine Strombegrenzungseinrichtung zum Unterbrechen des Ladestroms zu dem Speicherbatterieabschnitt (104) in dem Elektroautomobil (100a, 100b) oder zum Reduzieren des Ladestroms, basierend auf einem Entscheidungsergebnis durch das Entscheidungseinrichtung; und
(d) eine Ladestromentscheidungseinrichtung zur Entscheidung über einen Betrag der Reduzierung des Ladestroms, basierend auf einer Beziehung zwischen Bereichsinformationen eines Besitzers des Elektroautomobils (100a, 100b) und Standortinformationen der Ladevorrichtung (200a, 200b), **dadurch gekennzeichnet, dass** der Betrag der Reduzierung des Stromniveaus umso kleiner wird, je weiter das Elektroautomobil (100a, 100b) von zu Hause weg ist.

2. Ladesystem für Elektroautomobil nach Anspruch 1, wobei:
(1) die Informationserfassungseinrichtung und die Entscheidungseinrichtung in der Zentralvorrichtung (300) umfasst sind;
(2) die Strombegrenzungseinrichtung und die Ladestromentscheidungseinrichtung in der Ladevorrichtung (200a, 200b) umfasst sind;
(3) die Zentralvorrichtung (300) ferner umfasst:
eine Übertragungseinrichtung zum Erteilen von Anweisungen, durch Kommunikation, für eine Abschaltung des Ladestroms oder eine Stromreduzierung, die durch die Entscheidungseinrichtung entschieden wurde; und
(4) die Ladevorrichtung (200a, 200b) ferner umfasst:
eine Empfangseinrichtung zum Empfangen von Anweisungen von der Übertragungseinrichtung; und
(5) die Strombegrenzungseinrichtung so konfiguriert ist, dass sie den Ladestrom zu dem Speicherbatterieabschnitt (104) in dem Elektroautomobil (100a, 100b) unterbricht oder den Ladestrom reduziert, basierend auf den Anweisungen der Empfangseinrichtung.

3. Ladesystem für Elektroautomobil nach Anspruch 1 oder 2, ferner umfassend einen Speicher, der Informationen über das Spezialfahrzeug speichert, dessen Ladevorgang nicht unterbrochen werden soll,
wobei die Strombegrenzungseinrichtung eine Steuerung durchführt, um den Ladestrom zu dem Speicherbatterieabschnitt (104) nicht zu unterbrechen oder zu reduzieren, wenn das Elektroautomobil (100a, 100b) von einem Spezialfahrzeug ist, in dem der Ladevorgang nicht unterbrochen werden soll.

4. Ladesystem für Elektroautomobil nach Anspruch 1 oder Anspruch 2,
wobei, wenn eine Restbatterieladung der Speicherbatterie in dem Elektroautomobil (100a, 100b) unter einem voreingestellten festen Wert liegt, die Strombegrenzungseinrichtung eine Steuerung durchführt, so dass eine Abschaltung oder Reduzierung des Ladestroms zu dem Speicherbatterieabschnitt (104) nicht durchgeführt wird.

5. Ladevorrichtung für Elektroautomobil (200a, 200b), umfassend:
(a) eine Informationserfassungseinrichtung zum Erfassen von Informationen über eine erzeugte Energiemenge und eine verbrauchte Energiemenge;
(b) eine Entscheidungseinrichtung zur Entscheidung über eine Abschaltung eines Ladestroms oder eine Reduzierung des Ladestroms für den Speicherbatterieabschnitt (104) in dem Elektroautomobil (100a, 100b) basierend auf der durch die Informationserfassungseinrichtung erfassten Informationen;
(c) eine Strombegrenzungseinrichtung zum Unterbrechen des Ladestroms zu dem Speicherbatterieabschnitt (104) in dem Elektroautomobil (100a, 100b) oder zum Reduzieren des Ladestroms, basierend auf einem Entscheidungsergebnis durch das Entscheidungseinrichtung; und
(d) eine Ladestromentscheidungseinrichtung zur Entscheidung über einen Betrag der Reduzierung des Ladestroms, basierend auf einer Beziehung zwischen Bereichsinformationen eines Besitzers des Elektroautomobils (100a, 100b) und Standortinformationen der Ladevorrichtung (200a, 200b), **dadurch gekennzeichnet, dass** der Betrag der Reduzierung des Stromniveaus umso kleiner wird, je weiter das Elektroautomobil (100a, 100b) von zu Hause weg ist.

6. Ladevorrichtung für Elektroautomobil (200a, 200b) nach Anspruch 5, ferner umfassend einen Speicher, der Informationen über das Spezialfahrzeug speichert, dessen Ladevorgang nicht unterbrochen werden soll,
wobei die Strombegrenzungseinrichtung eine Steuerung durchführt, um den Ladestrom zu dem Speicherbatterieabschnitt (104) nicht zu unterbrechen oder zu reduzieren, wenn das Elektroautomobil (100a, 100b) von einem Spezialfahrzeug ist, in dem der Ladevorgang nicht unterbrochen werden soll.

7. Ladegerät für Elektrofahrzeuge (200a, 200b) nach Anspruch 5,
wobei, wenn eine Restbatterieladung der Speicherbatterie in dem Elektroautomobil (100a, 100b) unter einem voreingestellten festen Wert liegt, die Strombegrenzungseinrichtung eine Steuerung durchführt, so dass eine Abschaltung oder Reduzierung des Ladestroms zu dem Speicherbatterieabschnitt (104) nicht durchgeführt wird.

## Revendications

1. Système de charge d'automobile électrique dans lequel un dispositif central (300), une automobile électrique (100a, 100b) et un dispositif de charge (200a, 200b) qui charge une section batterie rechargeable (104) dans ladite automobile électrique (100a, 100b) sont connectés par des lignes d'alimentation (800), comprenant :
(a) un moyen d'acquisition d'informations pour acquérir des informations d'une quantité d'énergie générée et d'une quantité d'énergie utilisée ;
(b) un moyen de décision pour décider d'une coupure d'un courant de charge ou d'une réduction dudit courant de charge vers ladite section batterie rechargeable (104) dans ladite automobile électrique (100a, 100b), sur la base desdites informations acquises par ledit moyen d'acquisition d'informations ;
(c) un moyen de limitation de courant pour interrompre ledit courant de charge vers ladite section batterie rechargeable (104) dans ladite automobile électrique (100a, 100b) ou réduire ledit courant de charge, sur la base d'un résultat de décision par ledit moyen de décision ; et
(d) un moyen de décision de courant de charge pour décider d'une quantité de réduction de courant de charge, sur la base d'une relation entre des informations de zone d'un propriétaire de ladite automobile électrique (100a, 100b) et des informations d'emplacement dudit dispositif de charge (200a, 200b), **caractérisé en ce que** la quantité de la réduction du niveau de courant diminue à mesure que l'automobile électrique (100a, 100b) s'éloigne du domicile.

2. Système de charge d'automobile électrique selon la revendication 1, dans lequel :
(1) le moyen d'acquisition d'informations et le moyen de décision sont compris dans le dispositif central (300) ;
(2) le moyen de limitation de courant et le moyen de décision de courant de charge sont compris dans le dispositif de charge (200a, 200b) ;
(3) ledit dispositif central (300) comprend en outre :
un moyen de transmission pour donner des instructions, par communication, pour une coupure dudit courant de charge ou une réduction de courant qui a été décidée par ledit moyen de décision ; et
(4) ledit dispositif de charge (200a, 200b) comprend en outre :
un moyen de réception pour recevoir des instructions à partir dudit moyen de transmission ; et
(5) le moyen de limitation de courant est configuré pour interrompre le courant de charge vers ladite section batterie rechargeable (104) dans ladite automobile électrique (100a, 100b) ou réduire ledit courant de charge, sur la base des instructions dudit moyen de réception.

3. Système de charge d'automobile électrique selon la revendication 1 ou la revendication 2, comprenant en outre une mémoire qui stocke des informations sur ledit véhicule spécial dont la charge ne devrait pas être interrompue,
dans lequel ledit moyen de limitation de courant réalise une commande de manière à ne pas interrompre ni réduire ledit courant de charge vers ladite section batterie rechargeable (104), si ladite automobile électrique (100a, 100b) est d'un véhicule spécial dans lequel la charge ne devrait pas être interrompue.

4. Système de charge d'automobile électrique selon la revendication 1 ou la revendication 2,
dans lequel, si une charge de batterie résiduelle de ladite batterie rechargeable dans ladite automobile électrique (100a, 100b) est au-dessous d'une valeur fixe prédéfinie, ledit moyen de limitation de courant réalise une commande de sorte que ni coupure ni réduction dudit courant de charge vers ladite section batterie rechargeable (104) ne soit réalisée.

5. Dispositif de charge d'automobile électrique (200a, 200b) comprenant :
(a) un moyen d'acquisition d'informations pour acquérir des informations d'une quantité d'énergie générée et d'une quantité d'énergie utilisée ;
(b) un moyen de décision pour décider d'une coupure d'un courant de charge ou d'une réduction dudit courant de charge vers une section batterie rechargeable (104) dans une automobile électrique (100a, 100b), sur la base d'informations acquises par ledit moyen d'acquisition d'informations ;
(c) un moyen de limitation de courant pour interrompre ledit courant de charge vers ladite section batterie rechargeable (104) dans ladite automobile électrique (100a, 100b) ou réduire ledit courant de charge, sur la base d'un résultat de décision par ledit moyen de décision ; et
(d) un moyen de décision de courant de charge pour décider d'une quantité de réduction dudit courant de charge, sur la base d'une relation entre des informations de zone d'un propriétaire de ladite automobile électrique (100a, 100b) et des informations d'emplacement dudit dispositif de charge (200a, 200b) qui réalise la charge de ladite section batterie rechargeable (104),
**caractérisé en ce que** la quantité de la réduction du niveau de courant diminue à mesure que l'automobile électrique (100a, 100b) s'éloigne du domicile.

6. Dispositif de charge d'automobile électrique (200a, 200b) selon la revendication 5, comprenant en outre une mémoire qui stocke des informations sur ledit véhicule spécial dont la charge ne devrait pas être interrompue,
dans lequel ledit moyen de limitation de courant réalise une commande de manière à ne pas interrompre ni réduire ledit courant de charge vers ladite section batterie rechargeable (104), si ladite automobile électrique (100a, 100b) est un véhicule spécial dans lequel la charge ne devrait pas être interrompue.

7. Dispositif de charge d'automobile électrique (200a, 200b) selon la revendication 5,
dans lequel, si ladite charge de batterie résiduelle de ladite batterie rechargeable de ladite automobile électrique (100a, 100b) est au-dessous d'une valeur fixe prédéfinie, ledit moyen de limitation de courant réalise une commande de sorte que ni coupure ni réduction dudit courant de charge vers ladite section batterie rechargeable (104) ne soit réalisée.
